# EUROPÄISCHE PATENTSCHRIFT

(11) **EP 2 414 226 B1**
(45) Veröffentlichungstag und Bekanntmachung des Hinweises auf die Patenterteilung: **30.01.2013**
(21) Anmeldenummer: 10715755.4
(22) Anmeldetag: 31.03.2010
(51) Int. Cl.: B63J 3/04

(54) **LANDANSCHLUSS FÜR SCHIFFE MIT EINEM GELENKKRAN**
DOCKSIDE CONNECTION FOR SHIPS HAVING AN ARTICULATED CRANE
RACCORDEMENT À LA TERRE POUR NAVIRES, À L'AIDE D'UNE GRUE ARTICULÉE

(30) Priorität: 02.04.2009 DE 102009015603
(43) Veröffentlichungstag der Anmeldung: 08.02.2012
(73) Patentinhaber: Siemens Aktiengesellschaft, 80333 München (DE); Stemmann-Technik GmbH, 48465 Schüttorf (DE)
(72) Erfinder: SCHMIDT, Hans-Erhard, 21406 Melbeck (DE); GLÜCKHARDT, Reimund, 49835 Wietmarschen (DE); MOSER, Jürgen, 91369 Wiesenthau (DE)
(86) Internationale Anmeldenummer: PCT/EP2010/054286
(87) Internationale Veröffentlichungsnummer: WO 2010/112544

(56) Entgegenhaltungen:
- EP-A1- 1 667 301
- WO-A1-2004/020765
- WO-A1-2006/079636
- DE-A1- 2 640 033
- DE-A1- 4 412 643
- DE-A1- 19 503 895
- JP-A- 2006 290 261

## Beschreibung

Die Erfindung betrifft eine Vorrichtung zum elektrischen Anschluss eines mehrphasigen Schiffsverteilungsnetzes eines Schiffes an ein mehrphasiges Landversorgungsnetz mit einem landseitig angeordneten Versorgungsnetzanschluss, der zumindest abschnittsweise über wenigstens eine Kabelverbindung mit einem Schiffsnetzanschluss des Schiffsverteilungsnetzes verbindbar ist.

Eine solche Vorrichtung ist aus der WO-A-2006/079636 oder der DE 10 2005 004 628 A1 bereits bekannt. Die dort gezeigte Vorrichtung ist zur Elektroenergieversorgung eines in einem Hafen liegenden Schiffes von Land aus vorgesehen. Die landseitige Energieversorgung eines anliegenden Schiffes ist notwendig, um die Dieselmotoren des Schiffes, die zur Energieversorgung erforderlich sind, abstellen zu können. Die Dieselmotoren weisen einen hohen Kraftstoffverbrauch auf und tragen beträchtlich zur Umweltbelastung bei, die insbesondere in Hafenstädten als misslich empfunden wird. Zur landseitigen Energieversorgung wird das Landversorgungsnetz mit dem Schiffverteilungsnetz verbunden. Da das Landversorgungsnetz und das Schiffsverteilungsnetz unterschiedliche Frequenzen, Sternpunktbehandlungen und dergleichen aufweisen können, erfolgt die Verbindung der beiden Netze über einen Frequenzumrichter. Der Frequenzumrichter des vorbekannten Landanschlusses umfasst einen Gleichrichter, der über einen Gleichspannungszwischenkreis mit einem Wechselrichter verbunden ist, so dass die von dem landseitigen Versorgungsnetz bereitgestellte Wechselspannung in die für das jeweilige Schiffsverteilungsnetz geeignete Wechselspannung umwandelbar ist. Auf diese Weise ist es beispielsweise möglich, ein für 60 Hz Wechselspannung ausgelegtes Schiffsverteilungsnetz durch ein 50 Hz Landversorgungsnetz mit Elektroenergie zu versorgen. Um den landseitig angeordneten Frequenzumrichter mit dem schiffsseitigen Verteilnetz zu verbinden, ist eine Kabelverbindung vorgesehen. Die Kabelverbindung umfasst eine Kabeltrommel, um die das Strom führende Verbindungskabel gewickelt ist. Die Kabeltrommel ermöglicht den Ausgleich eines Tiedenhubs, also einer sich mit dem Wasserpegel ändernden Höhenlage des Schiffes. Das Installieren der Kabelverbindung mit einer Kabeltrommel ist jedoch umständlich mit erhöhten Betriebskosten im Gefolge.

Aufgabe der Erfindung ist es daher, eine Vorrichtung der eingangs genannten Art bereitzustellen, mit der ein schneller und sicherer Anschluss des Landversorgungsnetzes an das Schiffsverteilungsnetz ermöglicht ist, wobei nach erfolgter Verbindung der Netze Schiffsbewegungen ausgeglichen werden.

Die Erfindung löst diese Aufgabe durch wenigstens einen als Träger für eine oder jede Kabelverbindung dienenden Knickarm, der Armsegmente aufweist, die über wenigstens eine Gelenkverbindung miteinander verbunden sind, wobei jeder Gelenkverbindung ein Knickantrieb zugeordnet ist, der zum gegenseitigen Verschwenken der Armsegmente eingerichtet ist, die mittels der Gelenkverbindung miteinander verbunden sind, die dem besagten Knickantrieb zugeordnet ist.

Erfindungsgemäß ist zum Tragen einer oder aller Kabelverbindungen, die jeweils ein Hochspannungskabel umfassen und sich während des Betriebs der Vorrichtung zumindest teilweise zwischen dem Schiffsverteilungsnetz und dem Schiffsnetzanschluss erstrecken, wenigstens ein Knickarm vorgesehen. So ist beispielsweise ein einziger Knickarm im Rahmen der Erfindung vorgesehen, der eine oder mehrere Kabelverbindungen trägt. Der Knickarm kann alle Kabelverbindungen tragen oder nur einen Teil der Kabelverbindungen, wobei die restlichen Kabelverbindungen der Vorrichtung ohne Knickarm auf das zu versorgende Schiff geführt sind. Auch können im Rahmen der Erfindung mehrere Knickarme vorgesehen sein, wobei jeder Knickarm eine oder mehrere Kabelverbindungen trägt. Die Kabelverbindung umfasst wie bereits ausgeführt wurde ein Kabel insbesondere Hochspannungskabel.

Knickarme sind im Zusammenhang mit Betonpumpen bekannt geworden. So beschreibt beispielsweise die DE 195 03 895 A1 eine Betonpumpe mit einem Verteilermast, der als Knickarm realisiert ist. Der Erfindung liegt die Erkenntnis zugrunde, dass ein aus der Bauwirtschaft bekannter Knickarm, der auch als Gelenkkran bezeichnet werden kann, sich auch hervorragend für den Landanschluss von Schiffen eignet.

Im Rahmen der Erfindung umfasst der Kickarm wenigstens zwei Armsegmente, die über eine Gelenkverbindung miteinander verbunden sind. Mit anderen Worten sind die Armsegmente aneinander angelenkt, wobei ein Knickantrieb zur gewünschten Veränderung des Schwenkwinkels eingerichtet ist, den die miteinander verbundenen Armsegmente bezüglich ihrer gemeinsamen Gelenkverbindung aufspannen. Der besagte Knickarm ist über eine zweckmäßige Bodenhalterung fest mit der Landseite verankert. Das von der Bodenhalterung abgewandte Ende des Kickarmes trägt hingegen das freie Ende jeder Kabelverbindung, das beispielsweise mit einem Steckverbindungsteil ausgerüstet ist. Durch das Verstellen des oder der Schwenkwinkel des Knickarms ist die Höhe und die Lage der Kabelenden variabel einstellbar; so dass die Kabelenden der Kabelverbindungen mit Hilfe des Knickarmes in unmittelbarer Nähe des Schiffsnetzanschlusses positionierbar sind. Die Anzahl der Armsegmente ist im Rahmen der Erfindung von der jeweiligen Anforderung und insbesondere von der Größe des mit Strom zu versorgenden Schiffes abhängig. Beträgt die Anzahl der Armsegmente beispielsweise vier, sind die besagten vier Armsegmente über drei Gelenkverbindungen miteinander verbunden. Dabei ist jeder Gelenkverbindung ein Knickantrieb zugeordnet, wobei der Knickantrieb sich jeweils an den beiden miteinander verbundenen Armsegmenten abstützt, so dass ein Aufspreizen der Armsegmente ermöglicht ist.

Vorteilhafterweise ermöglicht jede Gelenkverbindung ein Verschwenken um eine Knickdrehachse. Mit anderen Worten ist ein Verschwenken der Armsegmente in nur einer Richtung ermöglicht. Solche Gelenkverbindungen sind zum einen kostengünstig und zum anderen ist das genaue Ausrichten des freien Endes des Knickarmes auf diese Weise vereinfacht.

Gemäß einer vorteilhaften Weiterentwicklung sind mehrere Gelenkverbindungen vorgesehen, wobei die Gelenkverbindungen parallel zueinander ausgerichtete Knickdrehachsen aufweisen. Gemäß dieser vorteilhaften Weiterentwicklung wird der Knickarm zunächst zum Schiffsnetzanschluss hin ausgerichtet, um anschließend über das Einstellen der oder des Schwenkwinkels die Lage des Kabelendes und des freien Endes des Knickarmes zu bestimmen.

Zweckmäßigerweise ist jede Knickdrehachse durch einen Hohlzylinder definiert, durch den sich jede Kabelverbindung erstreckt. Der Hohlzylinder dient mit anderen Worten neben der gelenkigen Verbindung zweier Armsegmente auch zur Führung aller Kabelverbindungen.

Zweckmäßigerweise ist der Knickarm an einem um eine senkrechte Drehachse drehbaren Drehturm befestigt. Mit anderen Worten ist die Bodenhalterung als Drehturm realisiert. Mittels dieser zweckmäßigen Weiterentwicklung der Erfindung kann der Knickarm besonders einfach zum Schiffsnetzanschluss hin ausgerichtet werden. Nach Ausrichten des Knickarmes wird mittels der Knickantriebe der jeweilige Schwenkwinkel eingestellt, so dass das freie Kabelende sich in unmittelbarer Nähe des Schiffsnetzanschlusses befindet und auf einfache Art und Weise beispielsweise von Hand mit dem Schiffsverteilungsnetz verbunden werden kann.

Vorteilhafterweise ist der Knickarm mittels einer Gelenkverbindung an dem Drehturm angelenkt. Die zusätzliche Gelenkverbindung erhöht die Flexibilität des Knickarmes hinsichtlich seiner Reichweite und Höhe. Die Gelenkverbindung, die zur Montage des Knickarms an dem Drehturm dient, weist vorteilhafterweise eine Knickdrehachse auf, die parallel zu den Knickdrehachsen der übrigen Gelenkverbindungen ausgerichtet ist.

Gemäß einer vorteilhaften Weiterentwicklung ist der Drehturm in einer Richtung verfahrbar. So ist der Drehturm beispielsweise auf Schienen geführt, die sich parallel zum Hafenkai erstrecken, an dem das mit Elektroenergie zu versorgende Schiff anliegt. Während der landseitigen Energieversorgung ist der Knickarm mit seinem freien Ende fest am Schiff verankert, wobei die Knickantriebe abgeschaltet sind. Die Armsegmente sind daher frei verschwenkbar, so dass der Knickarm beispielsweise durch Tiedenhub oder sonstige Wasserbewegungen herbei geführte Lageschwankungen des Schiffes auf einfache Art und Weise ausgleichen kann. Die Verschiebbarkeit des Drehturms erhöht daher die Sicherheit der Vorrichtung beträchtlich.

Gemäß einer zweckmäßigen Weiterentwicklung sind die Knickantriebe als Hydraulikantriebe ausgestaltet. Der Hydraulikantrieb umfasst beispielsweise einen Hydraulikzylinder, in dem ein Hydraulikkolben frei verschiebbar angeordnet ist. Der Hydraulikkolben und der Hydraulikzylinder begrenzen eine Hydraulikkammer, die mit Hydraulikflüssigkeit befüllt ist. Dabei ist der Kolben mit einer Kolbenstange verbunden, die sich an dem Armsegment abstützt, das über die Gelenkverbindung mit dem Armsegment verbunden ist, an dem der Hydraulikzylinder befestigt ist. Zum Verschwenken der Armsegmente wird der Hydraulikdruck in der Hydraulikkammer beispielsweise erhöht, so dass die Hydraulikkolben ein stückweit in dem Hydraulikzylinder nach oben bewegt wird, wobei sich der Schwenkwinkel vergrößert, der durch die aneinander angelenkten Armsegmente bezüglich ihrer Gelenkverbindung definiert ist. Bei Druckabfall verkleinert sich der besagte Schwenkwinkel hingegen. Zum Einstellen des Hydraulikdruckes dient eine Hydraulikpumpe, die mit einer zweckmäßigen Steuerung oder Regelungseinheit zusammenwirkt.

Zweckmäßigerweise sind Arretierungsmittel zum Fixieren des freien Endes des Knickarmes an dem Schiff vorgesehen.

Wie bereits erwähnt wurde, ist es mit Hilfe der Arretierungsmittel möglich, den Kabelträger mit dem Schiff zu verbinden, wobei die Knickantriebe abgestellt werden. Hub- oder Seitenbewegungen des Schiffes können auf diese Art und Weise bequem ausgeglichen werden.

Gemäß einer diesbezüglich zweckmäßigen Weiterentwicklung weisen die Arretierungsmittel ein an dem freien Ende des Knickarmes angeordnetes Einfügeteil und ein zum Einfügeteil formkomplementäres Aufnahmeteil auf, das auf dem Schiff angeordnet ist. Gemäß dieser zweckmäßigen Weiterentwicklung ist beispielsweise das konisch ausgebildete Einfügeteil in eine formkomplementäre Aufnahme einfügbar. Somit ist das freie Ende des Knickarmes am Schiff fixiert. Das freie Ende des Kabels kann nun beispielsweise mittels einer zweckmäßigen Steckverbindung von Hand mit dem Schiffsversorgungsnetz verbunden werden.

Zweckmäßigerweise ist eine Überwachungseinrichtung vorgesehen, welche die von den Armsegmenten bezüglich der Gelenkverbindung aufgespannten Schwenkwinkel jeweils erfasst und beim Überschreiten eines Schwenkwinkelschwellenwertes ein Warnsignal auslöst. Mit Hilfe dieser vorteilhaften Weiterentwicklung ist es möglich, ein Alarmsignal zu erzeugen, wenn sich das Schiff beispielsweise vom Hafenkai losgelöst hat.

Zweckmäßigerweise ist das zum Verbinden mit dem Schiffsnetzanschluss eingerichtete Ende jeder Kabelverbindung von einer Kabelendenführung gehalten, die von einer Kabelendgelenkverbindung an dem freien Ende des Knickarmes gehalten ist, wobei der Kabelendgelenkverbindung ein Kabelendantrieb zugeordnet ist, der zum Verschwenken der Kabelendenführung eingerichtet ist. Mit Hilfe der Kabelendenführung ist die elektrische Verbindung zwischen Schiffsverteilungsnetz und Kabel vereinfacht, da die in der Regel schweren Kabelverbindungen mit Hilfe der maschinell verschwenkbaren Kabelendenführung in die unmittelbare Nähe des Schiffsnetzanschlusses befördert werden können.

Gemäß einer diesbezüglich zweckmäßigen Weiterentwicklung weist die Kabelendgelenkverbindung zwei rechtwinklig zueinander angeordnete Schwenkachsen auf. Mit anderen Worten kann die Kabelendgelenkverbindung in zwei Richtungen verschwenkt werden, wodurch eine noch einfachere Ausrichtung der Kabelendenführung ermöglicht ist. Der Kabelendgelenkverbindung sind dann zweckmäßigerweise zwei Kabelendenantriebe zugeordnet.

Gemäß einer bevorzugten Ausgestaltung der Erfindung ist der Versorgungsnetzanschluss über einen ebenfalls landseitig angeordneten Frequenzumrichter mit dem Schiffnetzanschluss verbunden. Die Kabelverbindung und die Kabelverbindungen erstrecken sich während des Betriebs der Vorrichtung beispielsweise zwischen dem Schiffsverteilungsnetz und dem Frequenzumrichter. Ein Frequenzumrichter ist erforderlich, wenn das Landversorgungsnetz und das zu versorgende Schiffsverteilungsnetz unterschiedliche Frequenzen, Sternpunktbehandlungen und dergleichen aufweisen können. Der Frequenzumrichter des vorbekannten Landanschlusses umfasst beispielsweise einen Gleichrichter, der über einen Gleichspannungszwischenkreis mit einem Wechselrichter verbunden ist, so dass die von dem landseitigen Versorgungsnetz bereitgestellte Wechselspannung in die für das jeweilige Schiffsverteilungsnetz geeignete Wechselspannung umwandelbar ist. Auf diese Weise ist es möglich, ein für 60 Hz Wechselspannung ausgelegtes Schiffsverteilungsnetz durch einem 50 Hz Landversorgungsnetz mit Elektroenergie zu versorgen.

Gemäß einer diesbezüglichen Weiterentwicklung der Erfindung sind beidseitig des Frequenzumrichters Transformatoren angeordnet. Dabei erstreckt sich die Kabelverbindung oder die die Kabelverbindungen während des Betriebs der Vorrichtung beispielsweise zwischen dem Schiffsverteilungsnetz und dem Transformator, der zwischen Frequenzumrichter und Schiffnetzanschluss angeordnet ist.

Die Erfindung wird nachfolgend an Hand von Ausführungsbeispielen unter Bezug auf die Figuren der Zeichnung beschrieben, wobei gleiche Bezugszeichen auf gleich wirkende Bauteile verweisen und wobei
- Figur 1: eine schematische Darstellung eines Ausführungsbeispiels der erfindungsgemäßen Vorrichtung,
- Figur 2: eine Seitenansicht eines Ausführungsbeispiels eines Knickarmes für eine erfindungsgemäße Vorrichtung und
- Figur 3: den Knickarm gemäß Figur 2 von oben zeigen.

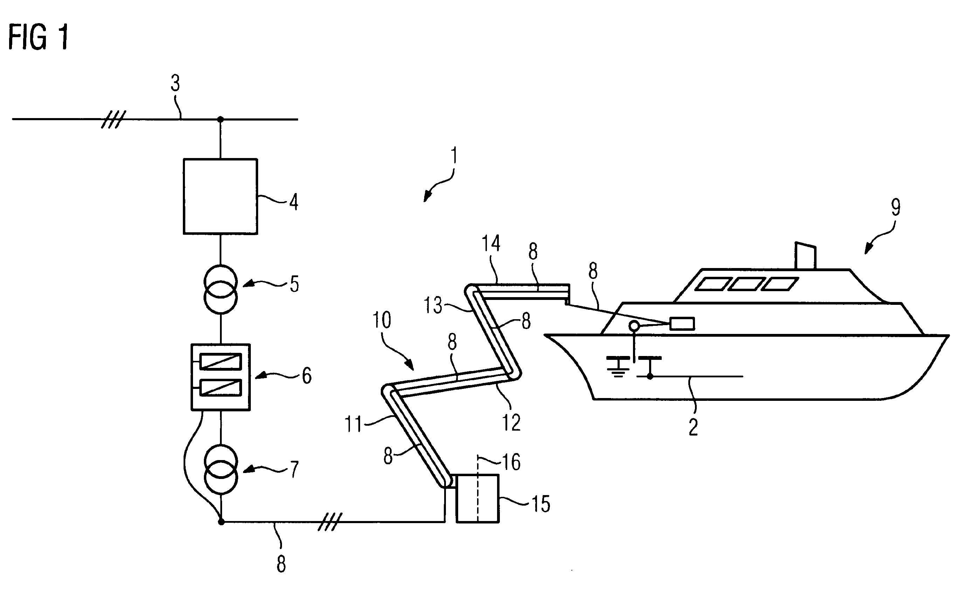

Figur 1 zeigt ein Ausführungsbeispiel der erfindungsgemäßen Vorrichtung 1, die zur Energieversorgung eines Schiffsverteilungsnetzes 2 eines Schiffes 9 durch ein landseitiges Versorgungsnetz 3 dient. Zum elektrischen Anschluss an das Versorgungsnetz 3 verfügt die Vorrichtung 1 über einen Versorgungsnetzanschluss 4, der über einen Transformator 5 mit einem Frequenzumrichter 6 verbunden ist, wobei dem Frequenzumrichter 6 ein weiterer Transformator 7 nachgeschaltet ist. Der Transformator 7 ist über eine Kabelverbindung 8 mit einem figürlich nicht dargestellten Schiffnetzanschluss und auf diese Weise mit dem Schiffverteilungsnetz 2 verbunden. Dabei sind der Versorgungsnetzanschluss 4, die Transformatoren 5, 7 und der Frequenzumrichter 6, der auch als Kurzkupplung bezeichnet werden kann, landseitig angeordnet.

Der Versorgungsnetzanschluss 4 ist in dem in Figur 1 gezeigten Ausführungsbeispiel als Schaltanlage beispielsweise als Mittelspannungsschaltanlage realisiert, so dass bei einem Fehler im Versorgungsnetz 3 das Schiffsverteilungsnetz 2 gezielt vom Versorgungsnetz 3 getrennt werden kann. Die Transformatoren 5,7 dienen zum Bereitstellen der geeigneten Spannung für den Frequenzumrichter 6 beziehungsweise für das Schiffeverteilungsnetz 2.

Der Frequenzumrichter 6 besteht in dem in Figur 1 gezeigten Ausführungsbeispiel aus zwei Umrichtern, die eine Brückenschaltung aus abschaltbaren Leistungshalbleitern, beispielsweise IGBTs, GTOs oder dergleichen aufweisen. Die Umrichter des Frequenzumrichters sind gleichspannungsseitig miteinander verbunden, wobei der Wechselrichter die für das jeweilige Schiffsverteilungsnetz 2 erforderliche Wechselspannung beispielsweise mit 60 Hz bereitgestellt. Die Frequenz des Landversorgungsnetzes beträgt hingegen 50 Hz.

Um die schwere Kabelverbindung 8 möglichst schnell und einfach zum Schiff 9 zu führen, ist ein Knickarm 10 vorgesehen, der über vier Armsegmente 11, 12, 13 und 14 verfügt, die mittels in Figur 1 nicht dargestellten Gelenkverbindungen miteinander verbunden sind. Der von zwei aneinander angelenkten Armsegmenten 11, 12 bezüglich ihrer Gelenkverbindung aufgespannte Schwenkwinkel ist mittels in Figur 1 ebenfalls nicht dargestellter Knickantriebe variierbar, so dass der Knickarm 10 eine über die Schwenkwinkel einstellbare Reichweite und Höhe aufweist, so dass die Kabelverbindung auf einfache Art und Weise unterschiedlich hohen und großen Schiffen zugeführt werden kann. Dabei ist der Knickarm 10 an einem auf Land aufgestellten Drehturm 15 befestigt, der bezüglich einer senkrechten Drehachse 16 verdrehbar ist. Mit Hilfe des Drehturms 15 kann das feie Ende des Knickarms 10 zum Schiff 9 ausgerichtet werden.

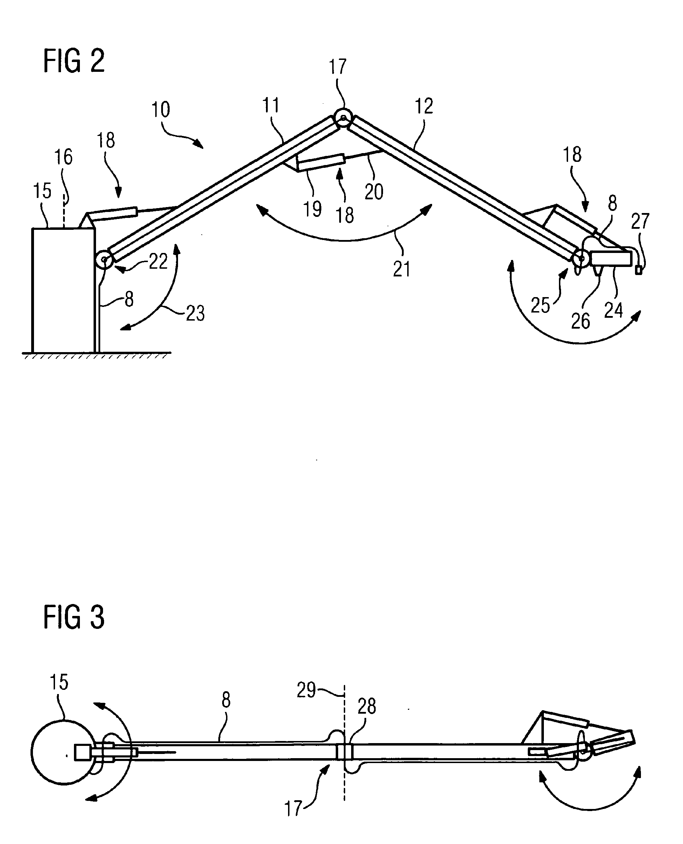

Figur 2 zeigt ein Ausführungsbeispiel eines Knickarmes 10 für eine erfindungsgemäße Vorrichtung 1 genauer. Der in Figur 2 dargestellt Knickarm 12 weist nur zwei Armsegmente 11, 12 auf, die über eine Gelenkverbindung 17 miteinander verbunden sind. Zur drehbaren Lagerung des Armsegmentes 12 an dem Armsegment 11 verfügt die Gelenkverbindung 17 über eine in die Zeichenebene der Figur 2 hinein laufende Knickdrehachse. Zum Verschwenken der Armsegmente 11, 12 dient ein der Gelenkverbindung zugeordneter Knickantrieb 18, der als hydraulischer Antrieb realisiert ist und aus einem Hydraulikzylinder 19 besteht, in dem ein figürlich nicht dargestellter Hydraulikkolben eine mit Hydraulikflüssigkeit befüllte Hydraulikkammer begrenzt. An dem frei verschiebbaren Hydraulikkolben ist eine Kolbenstange 20 befestigt. Die Kolbenstange 20 stützt sich an dem Armsegment 12 ab, wobei der Hydraulikzylinder 19 an dem Armsegment 11 angelenkt ist. Durch Erhöhen des Hydraulikdruckes in dem Hydraulikzylinder 19 wird die Kolbenstange 20 aus dem Hydraulikzylinder 19 heraus verschoben, so dass sich der Schwenkwinkel 21 vergrößert.

Wie ebenfalls in Figur 2 erkennbar ist, ist der Knickarm 10 über eine weitere Gelenkverbindung 22 mit dem Drehturm 15 verbunden, so dass ein weiterer Schwenkwinkel 23 definiert ist. Am vom Drehturm 15 abgewandten freien Ende des Knickarmes 10 sind eine Kabelendenführung 24 und eine Kabelendgelenkverbindung 25 erkennbar, der ein Kabelendantrieb 18 zugeordnet ist. Der Kabelendantrieb 18 ermöglicht ein Verschwenken der Kabelendenführung 24 in der Zeichenebene. Weiterhin ist ein Einfügeteil 26 erkennbar, das in eine formkomplementäre Ausnehmung des Schiffes einführbar ist, so dass der Knickarm 10 am Schiff verankert wird. Auf diese Art und Weise sind Arretierungsmittel zum Halten des Knickarmes 10 an dem Schiff 9 bereitgestellt. Das Kabelende ist ferner mit einem Stecker 27 ausgerüstet, der in eine entsprechende figürlich nicht dargestellt Steckerbuchse des Schiffes 9 als Schiffsnetzanschluss einführbar ist.

Figur 3 zeigt den Knickarm 10 gemäß Figur 2 in einer Draufsicht. Insbesondere ist erkennbar, dass der Drehturm 15 um eine senkrechte Drehachse verdreht werden kann. Ferner ist erkennbar, dass die Gelenkverbindung 17 einen Hohlzylinder 28 ausbildet, durch den sich die Kabelverbindung 8 erstreckt, wobei gleichzeitig eine Knickdrehachse 29 definiert ist, die rechtwinklig zur senkrechten Drehachse 16 des Drehturms 15 verläuft. Die Gelenkverbindungen zur Verbindung der Armsegmente oder zur Lagerung des Knickarms 10 an dem Drehturm weisen lediglich eine Drehachse auf, so dass ein Verschwenken in nur einer Richtung ermöglicht ist. Die Kabelendgelenkverbindung 25 ist jedoch mit einer zweiten Knickdrehachse ausgerüstet. Somit kann die Kabelendenführung 24 in zwei Richtungen verschwenkt werden, wodurch das genaue Zuführen des Steckers 27 in die zugeordnete Buchse des Schiffsnetzanschlusses sowie das Verbinden der Arretierungsmittel vereinfacht ist.

## Patentansprüche

1. Vorrichtung (1) zum elektrischen Anschluss eines mehrphasigen Schiffsverteilungsnetzes (2) eines Schiffes (9) an ein mehrphasiges Landversorgungsnetz (3) mit einem landseitig angeordneten Versorgungsnetzanschluss (4), der zumindest abschnittsweise über wenigstens eine Kabelverbindung (8) mit einem Schiffsnetzanschluss des Schiffsverteilungsnetzes (2) verbindbar ist,
**gekennzeichnet durch**
wenigstens einen als Träger für eine oder jede Kabelverbindung (8) dienenden Knickarm (10), der Armsegmente (11,12,13,14) aufweist, die über wenigstens eine Gelenkverbindung (17) miteinander verbunden sind, wobei jeder Gelenkverbindung (17) ein Knickantrieb (18) zugeordnet ist, der zum gegenseitigen Verschwenken der Armsegmente (11,12,13,14) eingerichtet ist, die mittels der Gelenkverbindung (17) miteinander verbunden sind, die dem besagten Knickantrieb zugeordnet ist.

2. Vorrichtung (1) nach Anspruch 1,
**dadurch gekennzeichnet, dass**
jede Gelenkverbindung (17) ein Verschwenken um eine Knickdrehachse (29) ermöglicht.

3. Vorrichtung (1) nach Anspruch 2,
**dadurch gekennzeichnet, dass**
mehrere Gelenkverbindungen (17) mit parallel zueinander ausgerichteten Knickdrehachsen (29) vorgesehen sind.

4. Vorrichtung (1) nach Anspruch 2 oder 3,
**dadurch gekennzeichnet, dass**
die Knickdrehachsen (29) durch einen Hohlzylinder (28) definiert sind, durch den sich jede Kabelverbindung (8) erstreckt.

5. Vorrichtung (1) nach einem der vorhergehenden Ansprüche,
**dadurch gekennzeichnet, dass**
der Knickarm (10) an einem um eine senkrechte Drehachse (16= drehbaren Drehturm (15) befestigt ist.

6. Vorrichtung (1) nach Anspruch 5,
**dadurch gekennzeichnet, dass**
der Knickarm (10) mittels einer Gelenkverbindung (22) an dem Drehturm (15) angelenkt ist.

7. Vorrichtung (1) nach einem der Ansprüche 5 oder 6,
**dadurch gekennzeichnet, dass**
der Drehturm (15) in einer Richtung verfahrbar ist.

8. Vorrichtung (1) nach einem der vorhergehenden Ansprüche,
**dadurch gekennzeichnet, dass**
jeder Knickantrieb (18) ein Hydraulikantrieb ist.

9. Vorrichtung (1) nach einem der vorhergehenden Ansprüche,
**gekennzeichnet durch**
Arretierungsmittel (26) zum Fixieren des freien Ende des Knickarms (10) am Schiff (9) .

10. Vorrichtung (1) nach Anspruch 9,
**dadurch gekennzeichnet, dass**
die Arretierungsmittel ein an dem freien Ende des Knickarmes angeordnetes Einfügeteil (26) und ein zum Einfügeteil formkomplementäres Aufnahmeteil aufweisen, das auf dem Schiff (9) angeordnet ist.

11. Vorrichtung (1) nach einem der vorhergehenden Ansprüche,
**gekennzeichnet durch**
eine Überwachungseinrichtung, die die von den Armsegmenten bezüglich der Gelenkverbindung aufgespannten Schwenkwinkel (21,23) jeweils erfasst und bei Überschreiten eines Schwenkwinkelschwellwertes ein Warnsignal auslöst.

12. Vorrichtung (1) nach einem der vorhergehenden Ansprüche,
**dadurch gekennzeichnet, dass**
das zum Verbinden mit dem Schiffsnetzanschluss eingerichtete Ende jeder Kabelverbindung (8) von einer Kabelendenführung (24) gehalten ist, die von einer Kabelendgelenkverbindung (25) an dem freien Ende des Knickarmes (10) gehalten ist, wobei der Kabelendgelenkverbindung (25) ein Kabelantrieb (18) zugeordnet ist, der zum Verschwenken der Kabelendenführung (24) eingerichtet ist.

13. Vorrichtung (1) nach Anspruch 12,
**dadurch gekennzeichnet, dass**
die Kabelendgelenkverbindung (25) zwei sich rechtwinklig zueinander erstreckende Schwenkachsen aufweist.

14. Vorrichtung (1) nach einem der vorhergehenden Ansprüche,
**dadurch gekennzeichnet, dass**
der Versorgungsnetzanschluss (4) über einen ebenfalls landseitig angeordneten Frequenzumrichter (6) mit dem Schiffnetzanschluss verbunden ist.

15. Vorrichtung (1) nach einem der vorhergehenden Ansprüche,
**dadurch gekennzeichnet, dass**
beidseitg des Frequenzumrichters (6) Transformatoren (5,7) angeordnet sind.

## Claims

1. Apparatus (1) for electrical connection of a polyphase marine-vessel distribution system (2) in a marine vessel (9) to a polyphase land supply system (3) having a supply system connection (4) which is arranged on the land and can be connected at least in places via at least one cable connection (8) to a marine-vessel system connection of the marine-vessel distribution system (2),
**characterized by**
at least one jointed arm (10), which is used as a support for a or each cable connection (8) and has arm segments (11, 12, 13, 14) which are connected to one another via at least one articulated connection (17), with each articulated connection (17) being associated with a joint drive (18) which is designed for mutual pivoting of the arm segments (11, 12, 13, 14) which are connected to one another by means of the articulated connection (17), which is associated with said joint drive.

2. Apparatus (1) according to Claim 1,
**characterized in that**
each articulated connection (17) allows pivoting about one joint rotation axis (29).

3. Apparatus (1) according to Claim 2,
**characterized in that**
a plurality of articulated connections (17) are provided, having joint rotation axes (29) which are aligned parallel to one another.

4. Apparatus (1) according to Claim 2 or 3,
**characterized in that**
the joint rotation axes (29) are defined by a hollow cylinder (28) through which each cable connection (8) extends.

5. Apparatus (1) according to one of the preceding claims,
**characterized in that**
the jointed arm (10) is attached to a rotating tower (15) which can rotate about a vertical rotation axis (16).

6. Apparatus (1) according to Claim 5,
**characterized in that**
the jointed arm (10) is articulated on the rotating tower (15) by means of an articulated connection (22).

7. Apparatus (1) according to one of Claims 5 or 6,
**characterized in that**
the rotating tower (15) can be moved in one direction.

8. Apparatus (1) according to one of the preceding claims,
**characterized in that**
each joint drive (18) is a hydraulic drive.

9. Apparatus (1) according to one of the preceding claims,
**characterized by**
locking means (26) for fixing the free end of the jointed arm (10) to the marine vessel (9).

10. Apparatus (1) according to Claim 9,
**characterized in that**
the locking means have an insert part (26), which is arranged at the free end of the jointed arm, and a holding part, which has a complementary shape to the insert part and is arranged on the marine vessel (9).

11. Apparatus (1) according to one of the preceding claims,
**characterized by**
a monitoring device which in each case detects the pivot angle (21, 23) which is covered by the arm segments with respect to the articulated connection, and triggers a warning signal if a pivot angle threshold value is exceeded.

12. Apparatus (1) according to one of the preceding claims,
**characterized in that**
the end of each cable connection (8) which is designed for connection to the marine-vessel system connection is held by a cable end guide (24), which is held by a cable end articulated connection (25) at the free end of the jointed arm (10), with the cable end articulated connection (25) being associated with a cable drive (18) which is designed to pivot the cable end guide (24).

13. Apparatus (1) according to Claim 12,
**characterized in that**
the cable end articulated connection (25) has two pivot axes which extend at right angles to one another.

14. Apparatus (1) according to one of the preceding claims,
**characterized in that**
the supply system connection (4) is connected to the marine-vessel system connection via a frequency converter (6), which is likewise arranged on the land.

15. Apparatus (1) according to one of the preceding claims,
**characterized in that** transformers (5, 7) are arranged on both sides of the frequency converter (6).

## Revendications

1. Dispositif ( 1 ) de raccordement électrique d'un réseau
( 2 ) polyphasé de distribution d'un bateau ( 9 ) à un réseau ( 3 ) polyphasé d'alimentation à terre, comprenant une borne ( 4 ) de réseau d'alimentation à terre, qui peut être reliée au moins par endroit par au moins une liaison ( 8 ) par câble à une borne du réseau ( 2 ) de distribution du bateau,
**caractérisé par**
au moins un bras ( 10 ) coudé, qui sert de support pour une ou pour chaque liaison ( 8 ) par câble et qui a des segments ( 11, 12, 13, 14 ) de bras, lesquels sont reliées entre eux par au moins une liaison ( 17 ) articulée, un entraînement ( 18 ) de coude étant associé à chaque liaison ( 17 ) articulée et étant conçu pour le pivotement mutuel des segments ( 11, 12, 13, 14 ) de bras, qui sont reliés entre eux au moyen de la liaison ( 17 ) articulée, laquelle est associée audit entraînement de coude.

2. Dispositif ( 1 ) suivant la revendication 1,
**caractérisé en ce que**
chaque liaison ( 17 ) articulée permet un pivotement autour d'un axe ( 29 ) de rotation de coude.

3. Dispositif ( 1 ) suivant la revendication 2,
**caractérisé en ce que**
il est prévu plusieurs liaisons ( 17 ) articulées ayant des axes ( 29 ) de rotation de coude parallèles entre eux,

4. Dispositif ( 1 ) suivant la revendication 2 ou 3,
**caractérisé en ce que**
les axes ( 29 ) de rotation de coude sont définis par un cylindre ( 28 ) creux, dans lequel s'étend chaque liaison ( 8 ) par câble.

5. Dispositif ( 1 ) suivant l'une des revendications précédentes,
**caractérisé en ce que**
le bras ( 10 ) coudé est fixé à une tour ( 15 ) de rotation, qui peut tourner autour d'un axe ( 16 ) de rotation vertical.

6. Dispositif ( 1 ) suivant la revendication 5,
**caractérisé en ce que**
le bras ( 10 ) coudé est articulé à la tour ( 15 ) de rotation au moyen d'une liaison ( 22 ) articulée.

7. Dispositif ( 1 ) suivant la revendication 5 ou 6,
**caractérisé en ce que**
la tour ( 15 ) de rotation peut être déplacée dans une direction.

8. Dispositif ( 1 ) suivant l'une des revendications précédentes,
**caractérisé en ce que**
chaque entraînement ( 18 ) de coude est un entraînement hydraulique.

9. Dispositif ( 1 ) suivant l'une des revendications précédentes,
**caractérisé par**
des moyens ( 26 ) de blocage, pour immobiliser l'extrémité libre du bras ( 10 ) coudé sur le bateau ( 9 ).

10. Dispositif ( 1 ) suivant la revendication 9,
**caractérisé en ce que**
les moyens de blocage ont une partie ( 26 ) mâle disposée à l'extrémité libre du bras coudé et une partie femelle de forme complémentaire à la partie mâle et disposée sur le bateau ( 9 ).

11. Dispositif ( 1 ) suivant l'une des revendications précédentes,
**caractérisé par**
un dispositif de contrôle, qui détecte les angles ( 21, 23 ) de pivotement des segments de bras par rapport à la liaison articulée et qui déclenche un signal d'alerte, si une valeur de seuil de l'angle de pivotement est dépassée.

12. Dispositif ( 1 ) suivant l'une des revendications précédentes,
**caractérisé en ce que**
l'extrémité destinée à être reliée à la borne du réseau du bateau de chaque liaison ( 8 ) par câble est maintenue par un guidage ( 24 ) d'extrémité de câble, qui est maintenu par une liaison ( 25 ) articulée d'extrémité de câble à l'extrémité libre du bras ( 10 ) coudé, un entraînement ( 18 ) de câble qui est conçu pour faire pivoter le guidage ( 24 ) d'extrémité de câble étant associé à la liaison ( 25 ) articulée d'extrémité de câble.

13. Dispositif ( 1 ) suivant la revendication 12,
**caractérisé en ce que**
la liaison ( 25 ) articulée d'extrémité de câble a deux axes de pivotement s'étendant à angle droit l'un par rapport à l'autre.

14. Dispositif ( 1 ) suivant l'une des revendications précédentes,
**caractérisé en ce que**
la borne ( 4 ) du réseau d'alimentation est reliée à la borne du réseau du bateau par un convertisseur ( 6 ) de fréquence disposé également à terre.

15. Dispositif ( 1 ) suivant l'une des revendications précédentes,
**caractérisé en ce que**
des transformateurs ( 5, 7 ) sont montés des deux côtés du convertisseur ( 6 ) de fréquence.
